## Europäisches Patentamt

## European Patent Office

## Office européen des brevets

(11) Veröffentlichungsnummer: **0 074 533**
**B1**

(12) **EUROPÄISCHE PATENTSCHRIFT**

(45) Veröffentlichungstag der Patentschrift:
10.04.85

(21) Anmeldenummer: **82107813.6**

(22) Anmeldetag: **25.08.82**

(51) Int. Cl.⁴: **A 01 D 90/02**

(54) **Ladewagen für Halmgut.**

(30) Priorität: **10.09.81 DE 8126403 U**

(43) Veröffentlichungstag der Anmeldung:
**23.03.83 Patentblatt 83/12**

(45) Bekanntmachung des Hinweises auf die Patenterteilung:
**10.04.85 Patentblatt 85/15**

(84) Benannte Vertragsstaaten:
**AT CH DE FR GB LI NL**

(56) Entgegenhaltungen:
**AT - B - 241 886**
**AT - B - 251 334**
**CH - A - 409 504**
**DE - A - 1 482 942**
**DE - B - 1 220 660**
**DE - B - 1 224 554**

(73) Patentinhaber: **Klöckner-Humboldt-Deutz AG**
**Zweigniederlassung Fahr, D-7702 Gottmadingen (DE)**

(72) Erfinder: **Silber, Wilhelm, Dipl.-Ing., Petersburg 21,**
**D-7702 Gottmadigen-Randegg (DE)**
Erfinder: **Schweizer, Robert, Feldbergstrasse 14,**
**D-7701 Hilzingen-Riedheim (DE)**

(74) Vertreter: **Patentanwälte Leinweber & Zimmermann,**
**Rosental 7/II Aufg., D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Ladewagen für Halmgut, mit einem eingangsseitig von dem Halmgut beschickten und ausgangsseitig in einen Laderaum des Ladewagens mündenden Förderschacht, und einer Anzahl von in den Förderschacht durch eine ihn oben begrenzende Deckenwandung hindurch in der Richtung auf eine ihn unten begrenzende Bodenwandung hineinragenden Förderzinken, wobei ausgangsseitig der Abstand der Deckenwandung von der Bodenwandung zwischen einer Normalstellung und einer aufgeweiteten Stellung veränderbar ist.

Bei einem derartigen bekannten Ladewagen (DE-B Nr. 1224554) ist ein in den Laderaum des Ladewagens mündender Bereich der Bodenwandung als eine Art Widerhaken ausgebildet, durch den verhindert werden soll, dass das in den Laderaum geförderte Halmgut in den Förderschacht zurückfällt. Zu diesem Zweck ist dieser Bereich der Bodenwandung gegenüber der Deckenwandung verschwenkbar gelagert und durch eine Feder zur Deckenwandung hin vorgespannt, wobei die Spannkraft dieser Feder derart bemessen ist, dass die Feder von dem durch den Förderschacht hindurchfliessenden Halmgut zusammengedrückt und hierdurch der Förderschacht freigegeben wird. Dagegen wird, wenn durch den Förderschacht kein Halmgut hindurchfliesst, die Feder wieder entspannt und hierdurch der betreffende Bereich der Bodenwandung zur Deckenwandung hin nach oben geklappt, um den unerwünschten Rückfluss des Halmgutes zu unterbinden. Bei diesem bekannten Ladewagen wird also der Abstand zwischen der Deckenwandung und der Bodenwandung ausgangsseitig durch ein Gleichgewicht zwischen dem Druck des geförderten Halmgutes und der Spannkraft der Feder bestimmt, so dass eine Beeinflussung des Abstandes von aussen nicht möglich ist.

Es ist auch bekannt (DE-A Nr. 1482942), bei einem einen Förderschacht aufweisenden Ladewagen den in den Laderaum mündenden Bereich des Förderschachtes insgesamt in seiner Richtung veränderlich zu gestalten, indem sowohl die Bodenwandung als auch die Deckenwandung unter Beibehaltung ihres gegenseitigen Abstandes ausgangsseitig gemeinsam verschwenkbar ausgebildet sind. Durch diese Massnahme soll einerseits eine Anpassung an die Füllhöhe des Laderaumes erzielt und andererseits auch ein unerwünschter Rückfluss des Halmgutes in den Förderschacht unterbunden werden.

Der Erfindung liegt die Aufgabe zugrunde, einen Ladewagen der eingangs genannten Art derart auszubilden, dass bei einer einfachen konstruktiven Ausgestaltung Verstopfungen des Förderschachtes schnell und ohne nennenswerte Betriebsunterbrechungen beseitigt werden können.

Diese Aufgabe wird erfindungsgemäss dadurch gelöst, dass an der eingangsseitig von einem Schwenklager gehaltenen Bodenwandung in einem Abstand zum Schwenklager ein zwei feste Endlagen aufweisender Lenker angelenkt ist, in deren erster die Bodenwandung in der Normalstellung festgelegt und in deren zweiter die Bodenwandung in die aufgeweitete Stellung verschwenkt ist.

Bei dem erfindungsgemässen Ladewagen befindet sich der Lenker im Normalbetrieb in seiner ersten festen Endlage, wogegen er bei einer im Förderschacht auftretenden Verstopfung von der Bedienungsperson in die zweite Endlage übergeführt wird. Dabei genügt es, den Lenker nur kurzzeitig in diese zweite Endlage zu bewegen, um eine im Förderschacht aufgetretene Verstopfung infolge der ausgangsseitigen Aufweitung des Förderschachtes rasch zu beseitigen. Da eine aufgetretene Verstopfung des Förderschachtes von der Bedienungsperson leicht bemerkt wird, kann diese durch ihren Eingriff die Verstopfung beseitigen, bevor Überlastsicherungen, die üblicherweise zusätzlich vorgesehen sind, zum Ansprechen gebracht werden, wodurch diese Überlastsicherungen geschont werden. Ferner ist mit der erfindungsgemässen Lösung der Vorteil verbunden, dass in der vom Förderschacht in der zweiten Endlage des Lenkers eingenommenen aufgeweiteten Stellung eine gute Zugänglichkeit zum Reinigen gegeben ist.

Eine besonders vorteilhafte Anwendung der Erfindung besteht bei einem Ladewagen mit einer Anzahl von an der Bodenwandung angeordneten, in den Förderschacht hineinragenden Messern darin, dass die Messer in der zweiten Endlage des Lenkers zumindest teilweise aus dem Wirkungsbereich der Förderzinken herausgeschwenkt sind. Bei einem derartigen Ladewagen, bei dem das Halmgut während des Durchgangs durch den Förderschacht gehächselt wird, kann es besonders leicht zu Verstopfungen des Förderschachtes kommen, und es ist diesem Zustand herkömmlich bereits dadurch Rechnung getragen worden, dass die Messer für sich schwenkbar an der Bodenwandung angelenkt sind und durch besondere Sicherungen beim Überschreiten einer gewissen Lastschwelle aus dem Förderschacht zurückgezogen werden. Neben dem verhältnismässig grossen baulichen Aufwand für diese Sicherungen, durch die nach der Beseitigung der Verstopfung die Messer auch wieder selbsttätig zurückgeschwenkt werden sollen, erweist sich jedoch diese Massnahme allein offenbar als unzureichend. Da bei der erfindungsgemässen Lösung der gesamte Förderschacht ausgangsseitig aufgeweitet und dadurch die Messer wenigstens teilweise aus dem Wirkungsbereich der Förderzinken herausgeschwenkt sind, können jedoch die aufgetretenen Verstopfungen sicher und schonend beseitigt werden.

Im Hinblick auf diese besondere Ausgestaltung ist es bei einem Ladewagen, bei dem die Messer in zwei in der Förderrichtung hintereinander angeordneten Messerreihen vorgesehen sind, zweckmässig, dass in der zweiten Endlage des Lenkers die eingangsseitige Messerreihe teilweise und die ausgangsseitige Messerreihe vollständig aus dem Wirkungsbereich der Förderzinken herausgeschwenkt ist.

In einer weiteren Ausgestaltung des erfindungsgemässen Ladewagens ist vorgesehen, dass in der zweiten Endlage des Lenkers von dem ausgangsseitigen Ende der Bodenwandung eine in den Aussenraum des Laderaums weisende Öffnung freigegeben ist. Der hierdurch erreichte Vorteil besteht darin, dass eine aufgetretene Verstopfung, da sie durch die Öffnung ins Freie befördert werden kann, besonders leicht beseitigt werden kann. Da es genügt, diese Öffnung nur kurzfristig freizugeben, werden die damit verbundenen Verluste klein gehalten. Ausserdem ermöglicht die Öffnung in vorteilhafter Weise einen Zugang zum Förderschacht, wodurch dessen Reinigung erleichtert ist.

Hinsichtlich der baulichen Ausführung ist es vorteilhaft, dass der Lenker am ausgangsseitigen Ende der Bodenwandung angelenkt ist. Hierdurch können die an dem Lenker angreifenden Kräfte verhältnismässig klein gehalten und eine stabile Einstellung der beiden Stellungen der Bodenwandung erreicht werden.

Eine konstruktiv besonders vorteilhafte Lösung zeichnet sich dadurch aus, dass der Lenker durch einen Kniehebel gebildet ist, dessen der Bodenwandung abgewandtes Ende an dem freien Ende einer mit ihrem dazu entgegengesetzten anderen Ende an einem bezüglich des Förderschachtes ortsfesten Drehpunkt gelagerten Lasche angelenkt ist. Bei dieser konstruktiven Lösung wird die zur Verlagerung des Lenkers zwischen seiner ersten und zweiten Endlage erforderliche Kraft an dieser Lasche angesetzt und hierdurch auf den Lenker übertragen. In diesem Zusammenhang besteht eine mögliche Ausführungsform darin, dass die Lasche mit einem Hydraulikaggregat gekoppelt ist. Die Betätigung dieses Hydraulikaggregates kann auf einfache Weise durch die Bedienungsperson, etwa von einem den Ladewagen ziehenden Schlepper aus, erfolgen. Eine weitere Lösung besteht darin, dass die Lasche mit einer an dem Ladewagen vorgesehenen, um eine Drehachse schwenkbaren Knickdeichsel gekoppelt ist. Jedoch ist eine in dieser Hinsicht besonders bevorzugte Ausführungsform dadurch gekennzeichnet, dass die Lasche an ihrem Drehpunkt mit einem an diesem Drehpunkt angelenkten, zwei den beiden Endlagen der Bodenwandung entsprechende Endstellungen aufweisenden Handhebel drehfest verbunden ist. Dieser Handhebel kann ohne Schwierigkeiten im Griffbereich einer auf einem den Ladewagen ziehenden Schlepper sitzenden Bedienungsperson angeordnet werden. Die Handhabung des Handhebels ist in einer weiteren Ausgestaltung der Erfindung dadurch besonders erleichtert, dass der Anlenkpunkt des Kniehebels an der Lasche gegenüber dem Drehpunkt des Handhebels eine Totpunktlage aufweist, die zwischen den beiden Endstellungen des Handhebels gelegen ist. Um den Lenker zwischen seinen beiden festen Endlagen zu bewegen, braucht bei dieser Ausführungsform der Handhebel nur über diesen Totpunkt hinwegbewegt zu werden.

Die konstruktive Ausgestaltung des Kniehebels wird ferner zweckmässig derart vorgenommen, dass der Kniehebel einen kurzen und einen langen Schenkel aufweist und mit seinem kurzen Schenkel an der Lasche angelenkt ist. Dabei ist es ferner vorteilhaft, dass der kurze und der lange Schenkel unter einem stumpfen Winkel zueinander angeordnet sind.

Bei der den Handhebel aufweisenden Ausführungsform des Ladewagens ist ferner vorgesehen, dass die Lasche unter einem spitzen Winkel zu dem Handhebel angeordnet ist.

Ein weiterer Gedanke der Erfindung besteht bei einem Ladewagen mit einem die Förderzinken tragenden Getriebe, das in dem der Deckenwandung des Förderschachtes abgewandten Bereich durch einen Gehäusedeckel abgedeckt ist, darin, dass der Drehpunkt der Lasche an dem Gehäusedeckel angeordnet ist. Bei dieser Anordnung können die Kraftübertragungsglieder für den Lenker, insbesondere der Handhebel, vorteilhaft in der Reichweite einer auf dem Schlepper sitzenden Bedienungsperson angeordnet werden.

Zur Erleichterung der Rückführung des Lenkers von seiner zweiten zu seiner ersten Endlage ist bei einer Ausführungsform der Erfindung ferner vorgesehen, dass der Lenker in der Richtung von seiner zweiten zu seiner ersten Endlage von einem Federelement beaufschlagt ist.

Schliesslich wird bei einem Ladewagen mit ei-ner dem Förderschacht eingangsseitig vorgesetz-ten, ein in einer an einer Schwenkachse angelenkten Radgabel gelagertes Tastrad aufweisenden Aufnahmevorrichtung für das Halmgut die Erfindung zweckmässigerweise dadurch verwirklicht, dass das eingangsseitige Schwenklager der Bodenwandung durch die Schwenkachse des Tastrades gebildet ist.

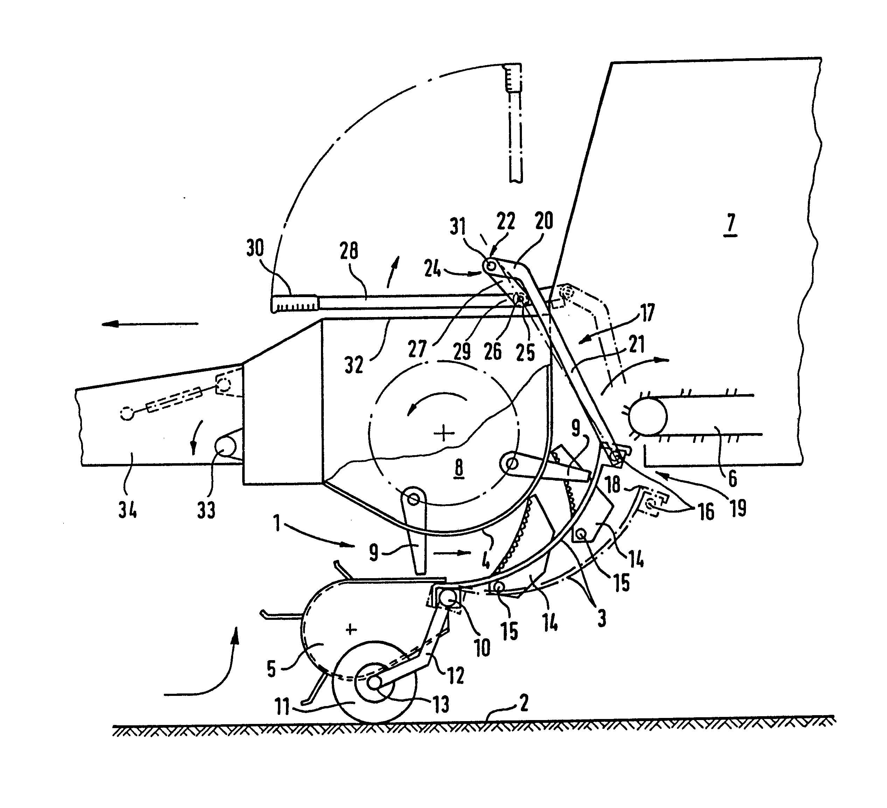

Weitere Merkmale, Einzelheiten und Vorteile der Erfindung ergeben sich aus der folgenden Beschreibung und der Zeichnung, auf die bezüglich aller im Text nicht besonders erwähnten Einzelheiten ausdrücklich verwiesen wird.

In der einzigen Figur der Zeichnung ist eine teilgeschnittene Seitenansicht eines Ladewagens dargestellt.

Der gezeigte Ladewagen hat einen Förderschacht 1, der an seiner dem Erdboden 2 zugekehrten Seite von einer Bodenwandung 3 und an seiner vom Erdboden 2 abgewandten Seite von einer Deckenwandung 4 begrenzt ist. Dem Förderschacht 1 ist eingangsseitig eine Aufnahmevorrichtung 5 vorgelagert, durch die Halmgut vom Erdboden 2 aufgenommen und dem Förderschacht 1 zugeleitet wird. Ausgangsseitig mündet der Förderschacht 1 in einen mit einem Förderboden 6 versehenen Laderaum 7 des Ladewagens ein. Durch die Deckenwandung 4 hindurch ragen Förderzinken 9 in den Förderschacht 1 hinein, wobei das dem Förderschacht 1 eingangsseitig zugeführte Halmgut durch diese Förderzinken 9 in der Förderrichtung zum ausgangsseitigen Ende des Förderschachtes 1 und in den Laderaum 7 hinein befördert wird, indem die Förderzinken 9 durch ein nicht näher dargestelltes Getriebe 8 innerhalb des Förderschachtes 1 in der Förderrichtung bewegt werden.

Die Bodenwandung 3 des Förderschachtes 1 ist eingangsseitig von einem Schwenklager getragen, das durch die Schwenkachse 10 einer in der Aufnahmevorrichtung 5 vorgesehenen, ein Tastrad 11 tragenden Radgabel 12 gebildet ist. Die Bodenwandung 3 ist um diese an dem das Radlager 13 tragenden Ende entgegengesetzten Ende der Radgabel 12 vorgesehene Schwenkachse 10 zwischen einer in ausgezogenen Linien dargestellten Normalstellung und einer in gestrichelten Linien dargestellten aufgeweiteten Stellung verschwenkbar. Ausserdem sind an der Bodenwandung 3 in den Förderschacht 1 hineinragende Messer 14 an Anlenkpunkten 15 verschwenkbar angelenkt, so dass sie beim Auftreffen von Fremdkörpern durch die Auslösung nicht näher dargestellter Überlastsicherungen um ihre Anlenkpunkte 15 herum aus dem Förderschacht 1 herausgeschwenkt werden können. Im einzelnen sind bei der dargestellten Ausführungsform die Messer 14 in der Förderrichtung gesehen hintereinander in zwei Messerreihen angeordnet.

An dem der Schwenkachse 10 entgegengesetzten ausgangsseitigen Ende der Bodenwandung 3 ist an einem Anlenkpunkt 16 ein Lenker 17 angelenkt. Dieser Lenker 17 weist zwei feste Endlagen auf, in deren erster die Bodenwandung 3 in ihrer in ausgezogenen Linien dargestellten Normalstellung festgelegt und in deren zweiter die Bodenwandung 3 in ihre in gestrichelten Linien dargestellte, aufgeweitete Stellung verschwenkt ist. In der der aufgeweiteten Stellung entsprechenden zweiten Endlage des Lenkers 17 ist die eingangsseitige Messerreihe teilweise und die ausgangsseitige Messerreihe vollständig aus dem Wirkungsbereich der Förderzinken 9 herausgeschwenkt. Ferner ist in dieser zweiten Endlage des Lenkers 17 von dem ausgangsseitigen Ende 18 der Bodenwandung 3 eine Öffnung 19 freigegeben, die in den Aussenraum des Laderaums 7 führt.

Im einzelnen ist der Lenker 17 durch einen einen kurzen Schenkel 20 und einen langen Schenkel 21 aufweisenden Kniehebel gebildet, wobei der lange Schenkel 21 an dem Anlenkpunkt 16 angelenkt ist. Der kurze und lange Schenkel 20 bzw. 21 sind unter einem stumpfen Winkel zueinander angeordnet. Das freie Ende 22 des kurzen Schenkels 20 ist an dem freien Ende 24 einer Lasche 27 angelenkt, die mit ihrem dazu entgegengesetzten anderen Ende 25 an einem bezüglich des Förderschachtes 1 ortsfesten Drehpunkt 26 gelagert ist.

An dem Drehpunkt 26 ist ferner ein Handhebel 28 mit seinem einen Ende 29 angelenkt und dort mit der Lasche 27 drehfest verbunden. Das andere Ende 30 des Handhebels 28 ist mit einem Bedienungshandgriff versehen. Der Handhebel 28 weist eine waagerechte und eine senkrechte Endstellung auf, wobei die waagerechte Endstellung der Normalstellung, und die senkrechte Endstellung der aufgeweiteten Stellung der Bodenwandung 3 entspricht.

Die Lasche 27 ist unter einem spitzen Winkel zu dem Handhebel 28 angeordnet, so dass beim Übergang des Handhebels 28 von der waagerechten Endstellung zur senkrechten Endstellung der Anlenkpunkt 31 des kurzen Schenkels 20 an der Lasche 27 zunächst gegenüber dem Drehpunkt 26 bis zu einer Totpunktlage angehoben wird und sodann absinkt, wodurch der Lenker 17 abgesenkt und dadurch die Bodenwandung 3 von ihrer Normalstellung in ihre aufgeweitete Stellung überführt wird.

Der Drehpunkt 26 ist an einem Gehäusedeckel 32 angeordnet, durch den das Getriebe 8 der Förderzinken 9 oben verschlossen ist. Der Gehäusedeckel 32 erstreckt sich waagerecht als ebene Fläche, wobei der Handhebel 28 in seiner waagerechten Endstellung parallel zu dem Gehäusedeckel 32 gerichtet ist. Um die Rückführung des Handhebels 28 von seiner senkrechten in seine waagerechte Endstellung zu erleichtern, kann ein in der Figur nicht dargestelltes Federelement vorgesehen sein, durch das der Lenker 17 in der Richtung seiner ersten Endlage vorgespannt ist.

Im Normalbetrieb befindet sich der Handhebel 28 in seiner waagerechten Endstellung, wodurch der Lenker 17 in seiner ersten Endlage festgelegt ist und daher die Bodenwandung 3 ihre Normalstellung einnimmt. Sobald jedoch in dem Förderschacht 1 eine Verstopfung auftritt, wird der Handhebel 28 durch eine Bedienungsperson, beispielsweise den Fahrer des den Ladewagen ziehenden Schleppers, kurzzeitig in die senkrechte Endstellung verschwenkt, wodurch der Lenker 17 in seine zweite Endlage gelangt und dadurch die Bodenwandung 3 in die aufgeweitete Stellung überführt wird. Hierdurch wird einerseits der durch die Verstopfung hervorgerufene Überlastdruck in dem Förderschacht 1 sofort verringert, und es ist andererseits möglich, den die Verstopfung herbeiführenden Überschuss durch die Öffnung 19 auszustossen. Nachdem jedoch die Bodenwandung 3 nur kurzzeitig in die aufgeweitete Stellung verschwenkt wird, tritt hierbei kein nennenswerter Verlust des Fördergutes auf.

Statt des Handhebels 28 ist bei einer nicht dargestellten weiteren Ausführungsform die Lasche 27 mit einem Hydraulikaggregat gekoppelt. Durch dieses wird, nach Einschaltung der Druckmittelzufuhr durch die Bedienungsperson, die Lasche 27 in der gleichen Weise bewegt, wie es bei der mit dem Handhebel 28 versehenen Ausführungsform der Fall ist. Alternativ ist jedoch in einer ebenfalls nicht dargestellten Ausführungsform die Lasche 27 mit einer um eine Achse 33 verschwenkbaren Knickdeichsel 34 gekoppelt, durch die der vorbeschriebene Bewegungsablauf der Lasche 27 bewirkt wird.

## Patentansprüche

1. Ladewagen für Halmgut, mit einem eingangsseitig von dem Halmgut beschickten und ausgangsseitig in einen Laderaum (7) des Ladewagens mündenden Förderschacht (1) und einer Anzahl von in den Förderschacht durch eine ihn oben begrenzende Deckenwandung (4) hindurch in der Richtung auf eine ihn unten begrenzende Bodenwandung (3) hineinragenden Förderzinken (9), wobei ausgangsseitig der Abstand der Dekkenwandung (4) von der Bodenwandung (3) zwischen einer Normalstellung und einer aufgeweiteten Stellung veränderbar ist, dadurch gekennzeichnet, dass an der eingangsseitig von einem Schwenklager (10) gehaltenen Bodenwandung (3) in einem Abstand zum Schwenklager (10) ein zwei feste Endlagen aufweisender Lenker (17) angelenkt ist, in deren erster die Bodenwandung (3) in der Normalstellung festgelegt und in deren zweiter die Bodenwandung (3) in die aufgeweitete Stellung verschwenkt ist.

2. Ladewagen nach Anspruch 1, mit einer Anzahl von an der Bodenwandung angeordneten, in den Förderschacht hineinragenden Messern, dadurch gekennzeichnet, dass die Messer (14) in der zweiten Endlage des Lenkers (17) zumindest teilweise aus dem Wirkungsbereich der Förderzinken (9) herausgeschwenkt sind.

3. Ladewagen nach Anspruch 2, bei dem die Messer in zwei in der Förderrichtung hintereinander angeordneten Messerreihen vorgesehen sind, dadurch gekennzeichnet, dass in der zweiten Endlage des Lenkers (17) die eingangsseitige Messerreihe teilweise und die ausgangsseitige Messerreihe vollständig aus dem Wirkungsbereich der Förderzinken (9) herausgeschwenkt ist.

4. Ladewagen nach einem der Ansprüche 1 bis 3, dadurch gekennzeichnet, dass in der zweiten Endlage des Lenkers (17) von dem ausgangsseitigen Ende (18) der Bodenwandung (3) eine in den Aussenraum des Laderaums (17) weisende Öffnung (19) freigegeben ist.

5. Ladewagen nach einem der Ansprüche 1 bis 4, dadurch gekennzeichnet, dass der Lenker (17) am ausgangsseitigen Ende (18) der Bodenwandung (3) angelenkt ist.

6. Ladewagen nach einem der Ansprüche 1 bis 5, dadurch gekennzeichnet, dass der Lenker (17) durch einen Kniehebel gebildet ist, dessen der Bodenwandung (3) abgewandtes Ende (22) an dem freien Ende (24) einer mit ihrem dazu entgegengesetzten anderen Ende (25) an einem bezüglich des Förderschachtes ortsfesten Drehpunkt (26) gelagerten Lasche (27) angelenkt ist.

7. Ladewagen nach Anspruch 6, dadurch gekennzeichnet, dass die Lasche (27) mit einem Hydraulikaggregat gekoppelt ist.

8. Ladewagen nach Anspruch 6, dadurch gekennzeichnet, dass die Lasche (27) mit einer an dem Ladewagen vorgesehenen, um eine Drehachse (33) schwenkbaren Knickdeichsel (34) gekoppelt ist.

9. Ladewagen nach Anspruch 6, dadurch gekennzeichnet, dass die Lasche (27) an ihrem Drehpunkt (26) mit einem an diesem Drehpunkt (26) angelenkten, zwei den beiden Endlagen der Bodenwandung (3) entsprechende Endstellungen aufweisenden Handhebel (28) drehfest verbunden ist.

10. Ladewagen nach Anspruch 9, dadurch gekennzeichnet, dass der Anlenkpunkt (31) des Kniehebels (17) an der Lasche (27) gegenüber dem Drehpunkt (26) des Handhebels (28) eine Totpunktlage aufweist, die zwischen den beiden Endstellungen des Handhebels (28) gelegen ist.

11. Ladewagen nach einem der Ansprüche 6 bis 10, dadurch gekennzeichnet, dass der Kniehebel (17) einen kurzen (20) und einen langen (21) Schenkel aufweist und mit seinem kurzen Schenkel (20) an der Lasche (27) angelenkt ist.

12. Ladewagen nach Anspruch 11, dadurch gekennzeichnet, dass der kurze (20) und der lange (21) Schenkel unter einem stumpfen Winkel zueinander angeordnet sind.

13. Ladewagen nach einem der Ansprüche 9 bis 12, dadurch gekennzeichnet, dass die Lasche (27) unter einem spitzen Winkel zu dem Handhebel (28) angeordnet ist.

14. Ladewagen nach einem der Ansprüche 6 bis 13, mit einem die Förderzinken tragenden Getriebe, das in dem der Deckenwandung des Förderschachtes abgewandten Bereich durch einen Gehäusedeckel abgedeckt ist, dadurch gekennzeichnet, dass der Drehpunkt (26) der Lasche (27) an dem Gehäusedeckel (32) angeordnet ist.

15. Ladewagen nach einem der Ansprüche 1 bis 14, dadurch gekennzeichnet, dass der Lenker (17) in der Richtung von seiner zweiten zu seiner ersten Endlage von einem Federelement beaufschlagt ist.

16. Ladewagen nach einem der Ansprüche 1 bis 15, mit einer dem Förderschacht eingangsseitig vorgesetzten, ein in einer an einer Schwenkachse angelenkten Radgabel gelagertes Tastrad aufweisenden Aufnahmevorrichtung für das Halmgut, dadurch gekennzeichnet, dass das eingangsseitige Schwenklager der Bodenwandung (3) durch die Schwenkachse (10) des Tastrades (11) gebildet ist.

## Claims

1. Loading vehicle for plant stalks, comprising a feed shaft (1), charged with the plant stalks on the inlet side and issuing in a loading chamber (7) of the loading vehicle on the outlet side, and a number of conveyor prongs (9), projecting into the feed shaft through a ceiling wall (4), which bounds the latter on top, in the direction of a base wall (3), which bounds it at the bottom, the distance of the ceiling wall (4) from the base wall (3) on the outlet side being variable between a normal position and an expanded position, characterized in that on the base wall (3), which is supported on the inlet side by a swivel bearing (10), a guide bar (17), having two fixed end positions, is articulated at a distance from the swivel bearing (10), the base wall (3) being fixed in the first end position in the normal position and the same base wall (3) being pivoted in the second end position into the expanded position.

2. Loading vehicle according to Claim 1, comprising a number of blades, fixed to the base wall and projecting into the feed shaft, characterized in that the blades (14) are pivoted in the second end position of the guide bar (17), at least partially, away from the range of action of the conveyor prongs (9).

3. Loading vehicle according to Claim 2, in which the blades are provided in two blade rows arranged in succession in the conveying direction, characterized in that, in the second end position of the guide bar (17), the blade row on the inlet side is pivoted partially away, and the blade row on the outlet side is pivoted completely away, from the range of action of the conveyor prongs (9).

4. Loading vehicle according to one of the Claims 1 to 3, characterized in that, in the second end position of the guide bar (17), an opening (19), pointing into the outer section of the loading chamber (7) is set free by the end (18) of the base wall (3) on the outlet side.

5. Loading vehicle according to one of the Claims 1 to 4, characterized in that the guide bar (17) is articulated to the end (18) of the base wall (3) on the outlet side.

6. Loading vehicle according to one of the Claims 1 to 5, characterized in that the guide bar (17) is formed by a toggle lever whose end (22) facing away from the base wall (3) is articulated to the free end (24) of a strap (27), the latter's opposite other end (25) being supported on a fulcrum (26) which is stationary relative to the feed shaft.

7. Loading vehicle according to Claim 6, characterized in that the strap (27) is coupled to a hydraulic set.

8. Loading vehicle according to Claim 6, characterized in that the strap (27) is coupled to a bent shaft (34) which is provided on the loading vehicle and can be pivoted about a rotary axis (33).

9. Loading vehicle according to Claim 6, characterized in that the strap (27) is connected rigidly at its fulcrum (26) with a hand lever (28) which is articulated at that fulcrum (26) and has two end positions corresponding to the end positions of the base wall (3).

10. Loading vehicle according to Claim 9, characterized in that the point of articulation (31) of the toggle lever (17) on the strap (27) has a dead centre position relative to the fulcrum (26) of the hand lever (28), this dead centre position being situated between the two end positions of the hand lever (28).

11. Loading vehicle according to one of the Claims 6 to 10, characterized in that the toggle lever (17) has a short (20) and a long (21) arm, its short arm (20) being articulated to the strap (27).

12. Loading vehicle according to Claim 11, characterized in that the short (20) and the long (21) arms are placed at an obtuse angle to each other.

13. Loading vehicle according to one of the Claims 9 to 12, characterized in that the strap (27) is placed at an acute angle to the hand lever (28).

14. Loading vehicle according to one of the Claims 6 to 13, comprising a gear carrying the conveyor prongs and covered by a casing lid in the zone facing away from the ceiling wall of the feed shaft, characterized in that the fulcrum (26) of the strap (27) is situated on the casing lid (32).

15. Loading vehicle according to one of the Claims 1 to 14, characterized in that the guide bar (17) is acted on by a spring element in the direction from its second towards its first end position.

16. Loading vehicle according to one of the Claims 1 to 15, comprising a receiver device for the plant stalks, which is placed in front of the feed shaft on the inlet side and comprises a roller feeler which is supported in a wheel fork articulated to a pivoting axle, characterized in that the swivel bearing of the base wall (3) on the inlet side is formed by the pivoting axle (10) of the roller feeler (11).

## Revendications

1. Chariot de chargement pour produit en brins, avec un couloir de transport (1) alimenté en produit en brins du côté entrée et débouchant, du côté sortie, dans un espace de chargement (7) du chariot de chargement et avec un certain nombre de doigts transporteurs (9) pénétrant en saillie dans le couloir de transport à travers une paroi de plafond (4) le limitant en haut, en direction d'une paroi de plancher (3) le limitant en bas, la distance du côté sortie, de la paroi de plafond (4) à la paroi de plancher (3), étant variable entre une position normale et une position élargie, caractérisé en ce que la paroi de plancher (3), portée du côté entrée par un palier de pivotement (10), est articulée, à une certaine distance du palier de pivotement (10), une bielle (17) présentant deux positions extrêmes fixes, dans la première desquelles la paroi de plancher (3) est immobilisée dans la position normale et dans la seconde desquelles la paroi de plancher (3) est amenée par pivotement dans la position élargie.

2. Chariot de chargement selon la revendication 1, avec un certain nombre de couteaux disposés sur la paroi de plancher et pénétrant en saillie dans le couloir de transport, caractérisé en ce que, dans la seconde position extrême de la bielle (17), les couteaux (14) sont sortis par pivotement au moins partiellement de la zone d'action des doigts transporteurs (9).

3. Chariot de chargement selon la revendication 2, dans lequel les couteaux sont prévus en deux rangées disposées l'une derrière l'autre dans la direction de transport, caractérisé en ce que, dans la seconde position extrême de la bielle (17), la rangée de couteaux du côté entrée est sortie partiellement par pivotement du domaine d'action des doigts transporteurs (9) et la rangée de couteaux du côté sortie est sortie complètement par pivotement du domaine d'action des doigts transporteurs (9).

4. Chariot de chargement selon l'une des revendications 1 à 3, caractérisé en ce que, dans la deuxième position extrême de la bielle (17), une ouverture (19), orientée vers l'espace extérieur de l'espace de chargement (17), est libérée par l'extrémité (18), du côté sortie, de la paroi de plancher (3).

5. Chariot de chargement selon l'une des revendications 1 à 4, caractérisé en ce que la bielle (17) est articulée, à l'extrémité (18) du côté sortie, à la paroi de plancher (3).

6. Chariot de chargement selon l'une des revendications 1 à 5, caractérisé en ce que la bielle (17) est constituée par un levier coudé dont l'extrémité (22), orientée du côté opposé à la paroi de plancher (3), est articulée à l'extrémité libre (24) d'une biellette (27) montée par son extrémité (25), opposée à celle-ci, sur un pivot (26) fixe en position relativement au couloir de transport.

7. Chariot de chargement selon la revendication 6, caractérisé en ce que la biellette (27) est accouplée à un appareil hydraulique.

8. Chariot de chargement selon la revendication 6, caractérisé en ce que la biellette (27) est accouplée à un timon coudé (34) prévu sur le chariot de chargement et susceptible de pivoter autour d'un axe de rotation (33).

9. Chariot de chargement selon la revendication 6, caractérisé en ce que la biellette (27) est reliée solidairement par rotation, en son pivot (26), à un levier manuel (28) articulé à ce pivot (26) et présentant deux positions extrêmes correspondant aux deux positions extrêmes de la paroi de plancher (3).

10. Chariot de chargement selon la revendication 9, caractérisé en ce que le point d'articulation (31) du levier coudé (17) à la biellette (27) présente, par rapport au pivot (26) du levier manuel (28), une position de point mort qui est située entre les deux positions extrêmes du levier manuel (28).

11. Chariot de chargement selon l'une des revendications 6 à 10, caractérisé en ce que le levier coudé (17) comporte une branche courte (20) et une branche longue (21) et est articulé par sa branche courte (20) à la biellette (27).

12. Chariot de chargement selon la revendication 11, caractérisé en ce que les branches respectivement courte (20) et longue (21) sont disposées, suivant un angle obtus, l'une par rapport à l'autre.

13. Chariot de chargement selon l'une des revendications 9 à 12, caractérisé en ce que la biellette (27) est disposée, suivant un angle aigu, par rapport au levier manuel (28).

14. Chariot de chargement selon l'une des revendications 6 à 13, avec un mécanisme d'entraînement à engrenage portant les doigts transporteurs et qui est recouvert par un couvercle de carter dans la région orientée du côté opposé à la paroi de plafond du couloir de transport, caractérisé en ce que le pivot (26) de la biellette (27) est disposé sur le couvercle de carter (32).

15. Chariot de chargement selon l'une des revendications 1 à 14, caractérisé en ce que la bielle (17) est sollicitée par un élément à ressort dans le sens allant de sa seconde à sa première position extrême.

16. Chariot de chargement selon l'une des revendications 1 à 15, avec un dispositif de ramassage pour le produit en brins comportant une roue palpeuse placée devant le couloir de transport du côté entrée et montée dans une fourche de roue articulée à un axe de pivotement, caractérisé en ce que le palier de pivotement, du côté entrée, de la paroi de plancher (3) est constitué par l'axe de pivotement (10) de la roue palpeuse (11).